# EUROPEAN PATENT APPLICATION

(11) **EP 3 249 517 A1**
(43) Date of publication of application: **29.11.2017**
(21) Application number: 17171291.2
(22) Date of filing: 16.05.2017
(51) Int. Cl.: G06F 3/12, G06F 3/0481, G06Q 10/00, H04W 4/04, G01C 21/00

(54) **DOCUMENT PROCESSING SYSTEM**

(30) Priority: 25.05.2016 EP 16171306
(71) Applicant: OCE Holding B.V., 5914 CA Venlo (NL)
(72) Inventor: EVEILLEAU, Frédérik A., 5914 CA Venlo (NL)
(74) Representative: OCE IP Department

(57) **Abstract**

A document processing system comprising a controller (12) for controlling at least one part of the document processing system, a user interface for allowing a user to interact with the document processing system, a mobile device (14) capable of communicating with the controller (12) in the document processing system via a wireless link (16), wherein a locating function (24) is provided for locating the mobile device (14), characterized in that the user interface has a hierarchical structure with at least three levels each of which is associated with a class of local entities (28, 30, 32) each of which contains at least a part of the document processing system, the local entities being nested such that each lower level entity (28, 30) is contained in an entity (30, 32) associated with a superior level in the hierarchy, and a selection function (34) is provided for automatically selecting one of the hierarchical levels dependent upon the local entities in which the mobile device (14) is located.

## Description

### Field of the invention

The invention relates to a document processing system comprising a controller for controlling at least one part of the document processing system, a user interface for allowing a user to interact with the document processing system, and a mobile device capable of communicating with the controller in the document processing system via a wireless link, wherein a locating function is provided for locating the mobile device.

### Background Art

It is known that a mobile device such as a laptop computer, a tablet computer, or a smartphone can be used as a user interface or at least as a component of a user interface for a printing system or other document processing systems. It is also known that the contents and layout of the user interface as presented on the display of the mobile device may vary dynamically as a function of the current status of the controlled system and/or the current location of the mobile device as detected with the locating function. For example, US 2010/317371 A1 describes a cell phone with a user interface that adapts automatically to the detected location of the cell phone.

It is an object of the invention to provide a document processing system that improves on assisting the user in navigating through the system.

### Summary of the Invention

In order to achieve this object, the document processing system according to the invention has a user interface with a hierarchical structure with at least three levels each of which is associated with a class of local entities each of which contains at least a part of the document processing system, the local entities being nested such that each low level entity is contained in an entity associated with a superior level in the hierarchy, and a selection function is provided for automatically selecting one of the hierarchical levels dependent upon the local entities in which the mobile device is located.

In this user interface, the selection function will always select the hierarchical level that is best adapted to the current location of the user and his mobile device in the document processing system and provides the information and options that are most useful for the user in the current situation.

For example, when the document processing system comprises several print rooms and a number of printers are installed in each print room, the top level of the hierarchical structure may represent only the print rooms without showing any particular details inside the print rooms. The local entity associated with this level may be the "outside world" outside of any of the print rooms. Thus, as long as the user is not in a print room, the selection function will select this top level of the hierarchical structure in order to give the user a general overview as to which print rooms are available and where they might be found.

The next lower level in the hierarchical structure may be the level of individual print rooms, and the print rooms will be the local entities associated with that level. Thus, when the user enters a particular print room, his mobile device will switch to the second hierarchical level and show the printers that are available in that print room, but without showing any particular details of the printers.

A lowest level in the hierarchy may be constituted by the individual printers, and the associated local entities will be the individual printers and their respective immediate neighborhood. Thus, when the user approaches one of the printers with his mobile device, the selection function will switch to the lowest level and show the details of the printer he is just approaching, along with control and setting options for controlling the operation of that particular printer.

More specific optional features of the invention are indicated in the dependent claims.

In one embodiment or mode of operation, the selection function may be configured to select always the lowest hierarchical level for which there exists a local entity in which the mobile device is located. In this embodiment, the selection function will operate like an auto-zoom function which focuses increasingly on the details of a particular object when the user approaches that object.

There may however be other embodiments or modes of operation in which the selection of the hierarchical level is determined (also) by other factors.

It will be understood that the document processing system may comprise a plurality of controllers which control different components of the system. Thus, the mobile device will preferably be capable of communicating with each of these controllers, e.g. with the controllers of each printer. The program software for the user interface may reside mainly in the mobile device or mainly in the controllers or may be distributed over the mobile device and the controllers.

The wireless link between the mobile device and the controllers may be based on any known wireless communication technology such as a mobile telephone network, WLAN (WiFi), Bluetooth, contact technologies such as Near Field Communication (NFC), Infrared Communication, and the like. In addition, even wired technology (e.g. USB) may be used at the lowest level.

The locating function may for example be formed by a GPS system implemented in the mobile device or by the known locating functions provided by mobile telephone networks. However, the different ranges of the various communication channels provide also implicit location information and may therefore also be utilized for establishing or assisting the locating function. For example, if a short range technology such as Bluetooth is available and utilized for communication with a controller, this implies that the location of the mobile device is not too far away from that controller, so that it can be concluded that the mobile device is present in the same print room as the controller. Similarly, when communication is possible via NFC or USB, this implies that the mobile device is located in the immediate vicinity of the printer in which the controller is installed.

Preferably, at least some levels of the user interface include graphical objects showing for example a map of the print rooms or other relevant locations, a plan of an individual print room or an image of an individual printer. When the graphical interface is displayed on a touch screen, the user may select and activate the local entities by touching them on the screen and may then actively switch the user interface to any of the hierarchy levels that are associated with the selected entity.

Conversely, the controller or controllers may be capable of sending messages or alerts to the user interface. In that case, the selection function of the mobile device will automatically switch to a level that is high enough to show the origin of the message.

### Brief Description of the Drawings

An embodiment example will now be described in conjunction with the drawings, wherein:
- Fig. 1: is a block diagram of a printing system with a user interface according to the invention;
- Fig. 2: illustrates a hierarchical structure of the user interface, and
- Figs. 3 to 5: are schematic representations of a mobile device displaying a graphical user interface according to the invention in different operational states.

### Detailed Description of the Drawings

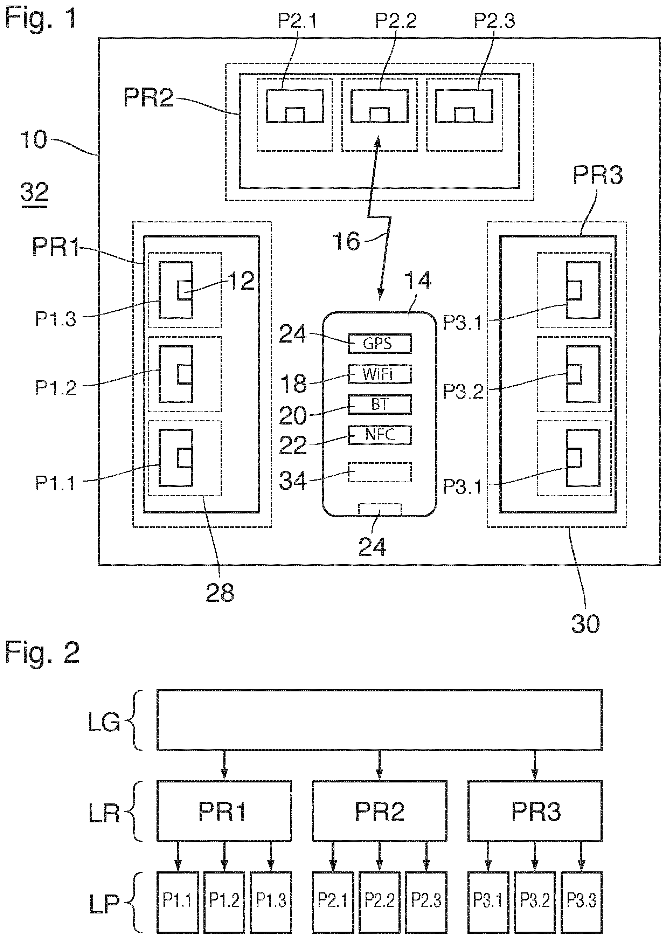

As an example of a document processing system to which the invention is applicable, Fig. 1 shows a printing system distributed over three print rooms PR1, PR2 and PR3, which are located for example on a common floor of an office building 10. Three printers P1.1, P1.2 and P1.3 are installed in print room PR1, and each printer has a local controller 12. Similarly, printers P2.1 - P2.3 and P3.1 - P3.3 are installed in the print rooms PR2 and PR3, respectively.

A component of a user interface for the entire printing system is constituted by a mobile device 14, e.g. a smartphone, which is capable of communicating with the controllers 12 of each printer via a wireless link 16. To that end, the mobile device 14 has several communication channels 18 (WiFi), 20 (Bluetooth) and 22 (NFC) which support different wireless communication techniques and differ from one another in particular in their range. Further, the mobile device 14 has a USB socket 24 for optional wireline communication with any of the controllers 12.

A GPS system 26 is implemented in the mobile device 14 for providing a self-locating function.

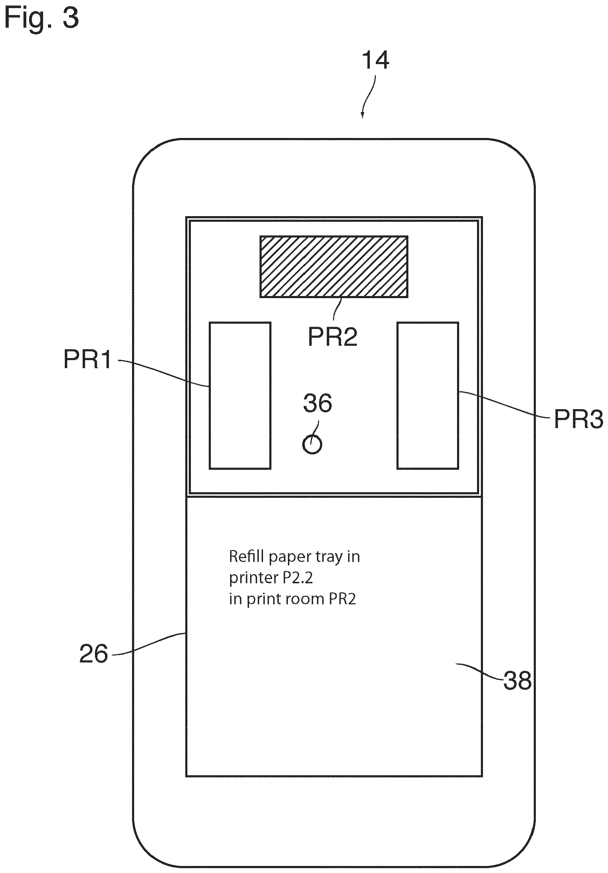

As is generally known in the art, the mobile device 14 has a touch screen 26 (Fig. 3) for displaying graphical information that may form part of the user interface.

The graphical contents of the user interface and the related options and functions have a hierarchical structure, as has been shown in Fig. 2. A lowermost level LP of the hierarchical structure is the level of the individual printers P1.1 - P3.3. A next higher level LR is the level of print rooms PR1 - PR3. The topmost level LG (global) is the level of the entire printing system.

Each of the levels LP, LR and LG is associated with a certain class of spatial entities 28, 30 and 32 that have symbolically been shown in Fig. 1. The spatial entities 28 associated with the lowest level LP are the immediate neighborhoods of the individual printers. The spatial entities 30 associated with the level LR are the individual print rooms (or spatial areas that essentially coincide with the print rooms). The spatial entity 32 associated with the top level LG can be considered to be the outside world outside of any of the print rooms.

The control software of the mobile device 14 implements a selection function 34 for selecting one of the hierarchical levels shown in Fig. 2, dependent upon the location where the mobile device has been detected by the locating function. When the mobile device is detected to be in the "outside world", i.e. outside of any of the print rooms PR1 - PR3, the selection function 34 selects the top level LG. In this level, the graphical user interface shown on the touch screen 26 may for example have an appearance as in Fig. 3. Here, the screen shows, in the top part, a map of the office building floor with the print rooms PR1, PR2 and PR3. A position mark 36 shows the current position of the mobile device on this map. In this way, the user is advised which print rooms are available and where he has to go in order to enter a specific print room. Further, the user may select one of the print rooms on the touch screen. The contour of that print room will then the highlighted on the map, and more detailed information on that print room will be displayed in a window 38 in the bottom part of the touch screen 26.

When the resolution of the GPS system and the resolution of location services provided by the mobile telephone network are not sufficient for accurately detecting the exact location of the mobile device, the locating function may be assisted by the other communication channels 18, 20 and 22 of the mobile device. For example, when communication is possible via the communication channel 18 (WiFi) which has a relatively long range, this means that the mobile device is located not too far away from the print rooms or possibly within one of the print rooms. On the other hand, if communication is not possible via the communication channel 20 (Bluetooth) which has a shorter range, this means that the distance between the mobile device and the closest one of the controllers 12 is larger than the Bluetooth range, so that it can be inferred that the mobile device is not inside any of the print rooms, and this will result in the top level LG being selected.

Optionally, the scale of the map shown in the top part of the screen in Fig. 2 may be varied depending on the detected distance of the mobile device from the print rooms. For large distances (outside of the range of the communication channel 18), the map may also turn into a city map in which the print rooms or the building in which they are located is marked. Optionally, a three-dimensional map may be shown, for example in order to indicate the locations of print rooms on different floors of a building.

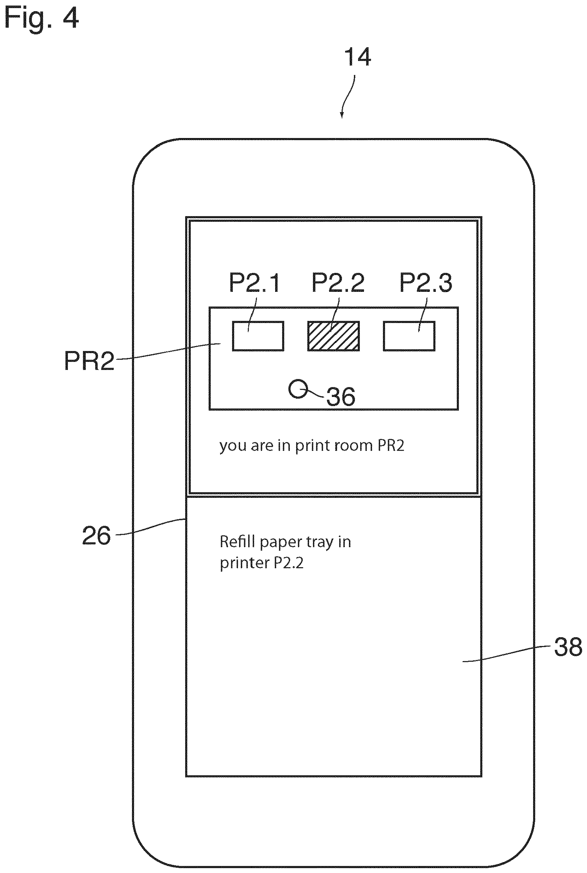

On the other hand, when communication between the mobile device 14 and a controller of one of the printers is established via the communication channel 20 (Bluetooth) but no communication is possible via the channel 22 (NFC), it can be concluded that the mobile device is within one of the print rooms or at least very close to the print room, but still remote from the printers therein. For example, when communication is established with the controller of the printer 2.2 in print room PR2, the selector 34 switches to the level LR, and the image displayed on the touch screen 26 changes to what is shown in Fig. 4. There, the top part of the screen shows a plan of the print room PR2 in which the mobile device has been located, and the positions and contours of all the printers P2.1 - P2.3 in that room are shown along with relevant information on the statuses and properties of these printer. The user may accordingly select one of the printers in order to retrieve more detailed information on that printer, which information will be displayed in the window 38 in the bottom part of the screen.

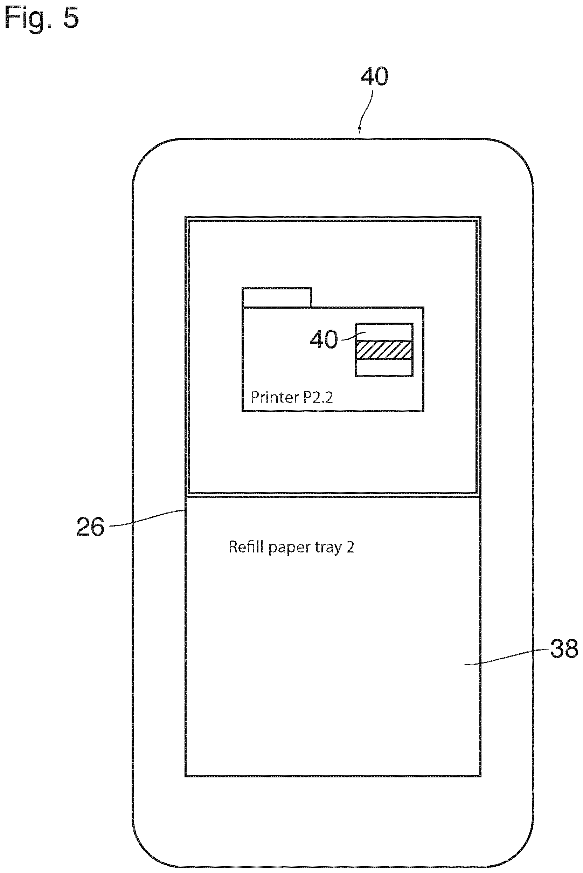

Finally, when the user approaches a particular printer, e.g. the printer P2.2, communication will be established via the channel 22 (NFC), and the selector 34 switches to the level LP. As a result, the display image on the screen changes to what is shown in Fig. 5, i.e. an image of the printer P2.2 including details of that printer such as paper trays 40, and the like. The status information, available setting options and command buttons will then be displayed in the window 38 in the bottom part of the screen so that a user may make the appropriate settings for a print job he wants to have printed.

It shall now be assumed that the user has started a print job on the printer P2.2 and then leaves the print room PR2 in order to fetch printed copies from another printer, e.g. the printer P1.1 in print room PR1. Consequently, the selector 34 will switch temporarily to the level LR and then to the level LG when the user leaves the print room PR2, and will then switch back to the level LP when the user approaches the printer P1.1. The touch screen 26 will accordingly show an image of that printer, similar to the image shown in Fig. 5.

It shall now further be assumed that, meanwhile, the printer 2.2 runs out of paper. Consequently, the controller 12 of the printer sends an alert to the mobile device 14 to alert the user that the printer P2.2 in the print room PR2 needs his attention. Then, although the user is still present in the immediate vicinity of the printer P1.1, the display will switch to the image shown in Fig. 3, with the print room PR2 highlighted, and a message "Refill paper tray in printer P2.2 in print room PR2" will be displayed in the window 38. When the user reacts and returns to the print room PR2, the image changes to what is shown in Fig. 4, with the contour of the printer P2.2 being highlighted. The message in the window 38 may change to "Refill paper tray in printer 2.2". Finally, when the user has reached the printer 2.2, the image changes to what is shown in Fig. 5, and the message in the window 38 changes to "Refill paper tray 2", and the pertinent paper tray 40 is highlighted in the image of the printer.

In this way, the hierarchical user interface guides the user to the place where his activity is required.

## Claims

1. A document processing system comprising a controller (12) for controlling at least one part of the document processing system, a user interface for allowing a user to interact with the document processing system, a mobile device (14) capable of communicating with the controller (12) in the document processing system via a wireless link (16), wherein a locating function (24) is provided for locating the mobile device (14),
**characterized in that** the user interface has a hierarchical structure with at least three levels (LP, LR, LG) each of which is associated with a class of local entities (28, 30, 32) each of which contains at least a part of the document processing system, the local entities being nested such that each lower level entity (28, 30) is contained in an entity (30, 32) associated with a superior level (LR, LG) in the hierarchy, and a selection function (34) is provided for automatically selecting one of the hierarchical levels dependent upon the local entities in which the mobile device (14) is located.

2. The document processing system according to claim 1, wherein the selection function (34) is configured to select, at least as a default selection, the lowest hierarchical level for which there exists an associated local entity in which the mobile device (14) is located.

3. The document processing system according to claim 1 or 2, wherein the mobile device (14) has a screen (26) for displaying graphical content of the user interface, said content comprising a graphical representation of the local entity in which the mobile device (14) has been located and which is associated with the selected level in the hierarchy.

4. The document processing system according to any of the preceding claims, wherein the mobile device (14) supports a plurality of wireless communication channels (18, 20, 22) which differ in their range, and wherein the locating function includes inferring a location of the mobile device from the availability of the communication channels (18, 20, 22) for communication with the controller (12).

5. A mobile device (14) for use in the document processing system according to any of the preceding claims, capable of communicating with the controller (12) in the document processing system via a wireless link (16), wherein a locating function (24) is provided for locating the mobile device (14),
**characterized in that** the user interface has a hierarchical structure with at least three levels (LP, LR, LG) each of which is associated with a class of local entities (28, 30, 32) each of which contains at least a part of the document processing system, the local entities being nested such that each lower level entity (28, 30) is contained in an entity (30, 32) associated with a superior level (LR, LG) in the hierarchy, and a selection function (34) is provided for automatically selecting one of the hierarchical levels dependent upon the local entities in which the mobile device (14) is located.

6. The mobile device according to claims 5, wherein the mobile device (14) supports a plurality of wireless communication channels (18, 20, 22) which differ in their range, and wherein the locating function includes inferring a location of the mobile device from the availability of the communication channels (18, 20, 22) for communication with the controller (12).

7. A method for displaying a user interface on a mobile device (14), the mobile device (14) capable of communicating with a controller (12) in a document processing system via a wireless link (16), the mobile device (14) further comprising a user interface for allowing a user to interact with the document processing system through the wireless link, wherein a locating function (24) is provided for locating the mobile device (14), and the user interface has a hierarchical structure with at least three levels (LP, LR, LG) each of which is associated with a class of local entities (28, 30, 32) each of which contains at least a part of the document processing system, the local entities being nested such that each lower level entity (28, 30) is contained in an entity (30, 32) associated with a superior level (LR, LG) in the hierarchy, the method comprising the steps of:
• receiving a location of the mobile device (14),
• selecting one of the hierarchical levels dependent upon the local entities in which the mobile device (14) is located, and
• switching the user interface to the selected hierarchical level.

8. The method according to claim 7, wherein selecting comprises, at least as a default selection, selecting the lowest hierarchical level for which there exists an associated local entity in which the mobile device (14) is located.

9. The method according to claim 7 or 8, wherein the mobile device (14) has a screen (26) for displaying graphical content of the user interface, said content comprising a graphical representation of the local entity in which the mobile device (14) has been located and which is associated with the selected level in the hierarchy.

10. The method according to claim 7, 8, or 9, wherein the mobile device (14) supports a plurality of wireless communication channels (18, 20, 22) which differ in their range, and wherein the locating function includes inferring a location of the mobile device from the availability of the communication channels (18, 20, 22) for communication with the controller (12).

11. A computer program product comprising program code stored on a non-transitory machine-readable medium and suitable for being executed on a processor of a mobile device (14) which is capable of communicating with a controller (12) in a document processing system via a wireless link (16), the mobile device having a locating function (24) for locating the mobile device (14), wherein the program code, when executed on the processor of the mobile device, causes the mobile device to perform the method of any of claims 7-10.
